(19) Europäisches Patentamt
European Patent Office
Office européen des brevets

(11) **EP 3 043 402 B1**

(12) **EUROPEAN PATENT SPECIFICATION**

(45) Date of publication and mention
of the grant of the patent:
**09.12.2020 Bulletin 2020/50**

(51) Int Cl.:
*H01M 2/14* *(2006.01)*   *H01M 4/134* *(2010.01)*
*H01M 10/052* *(2010.01)*   *H01M 2/16* *(2006.01)*

(21) Application number: **14839310.1**

(22) Date of filing: **01.09.2014**

(86) International application number:
**PCT/JP2014/072898**

(87) International publication number:
**WO 2015/030230 (05.03.2015 Gazette 2015/09)**

(54) **PROTECTIVE FILM, SEPARATOR USING SAME, AND SECONDARY BATTERY**

SCHUTZFOLIE, SEPARATOR DAMIT UND SEKUNDÄRBATTERIE

FILM PROTECTEUR, SÉPARATEUR L'UTILISANT ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2013 JP 2013181316**

(43) Date of publication of application:
**13.07.2016 Bulletin 2016/28**

(73) Proprietor: **W.L. Gore & Associates G.K.**
**Tokyo 108-0075 (JP)**

(72) Inventor: **KOBAYASHI, Kotaro**
**Tokyo 108-0075 (JP)**

(74) Representative: **HGF**
**1 City Walk**
**Leeds LS11 9DX (GB)**

(56) References cited:
**EP-A1- 1 191 622    EP-A1- 2 410 592**
**WO-A1-99/54953    WO-A1-2013/058119**
**WO-A1-2013/108510    JP-A- H09 293 518**
**JP-A- 2001 176 482    JP-A- 2003 317 719**
**JP-A- 2007 157 571    JP-A- 2008 270 160**
**JP-A- 2011 238 404    US-A1- 2007 037 058**

**Description**

TECHNICAL FIELD

The present invention relates to a protective film, and a separator and a secondary battery using the same. In particular, the present invention relates to a protective film for protecting an anode including lithium, and a separator and a secondary battery using the same.

BACKGROUND ART

In recent years, portable cordless products such as CD players, multimedia players, cellular phones, smartphones, notebook personal computers, tablet devices, and video cameras have been increasingly miniaturized and made portable. Further, from the standpoint of environmental issues such as air pollution and increased carbon dioxide, hybrid vehicles and electric vehicles have been developed and are at the stage of practical use. Such electronics and electric vehicles require an excellent secondary battery having characteristics such as high efficiency, high output, high energy density, and light weight. As a secondary battery having such properties, various secondary batteries have been developed and researched.

A chargeable and dischargeable secondary battery generally has a structure that prevents direct electrical contact between a positive electrode and a negative electrode by separating the positive electrode (cathode) and the negative electrode (anode) with a porous polymer film including an organic electrolyte solution.

Until now, $V_2O_5$, $Cr_2O_5$, $MnO_2$, $TiS_2$, and the like are known as a positive electrode active material of this nonaqueous electrolyte secondary battery. In lithium ion batteries that are currently commercialized, $LiCoO_2$, $LiMn_2O_4$, $LiNiO_2$, and the like are used as a 4-V class positive electrode active material.

As a negative electrode, alkali metals including metallic lithium have been studied so much. This is because, in particular, metallic lithium has a very high theoretical energy density (3861 mAh/g by weight capacity density) and a low charge/discharge potential (-3.045 V vs. SHE) and thus is considered to be an ideal negative electrode material.

As an electrolyte solution, for example, a lithium salt dissolved in a nonaqueous organic solvent is used, and has good ionic conductivity and negligible electrical conductivity. During charging, lithium ions move from a positive electrode to a negative electrode (lithium). In contrast, during discharging, lithium ions move to the positive electrode.

However, using a negative electrode (anode) including lithium has the following problem. Dendritic lithium (lithium dendrite) precipitates on the lithium surface of the negative electrode during charging. The dendritic lithium grows as the charge and discharge is repeated, causing, for example, detachment from the lithium metal to thereby reduce cycle characteristics. In the worst case, the dendritic lithium grows to the extent that it breaks through a separator, causing a short circuit of a battery, which can cause firing of the battery.

Thus, to use a negative electrode (anode) including lithium, it is necessary to solve the problem of lithium dendrite.

Thus, various carbonaceous materials, metals such as aluminum, alloys or oxides thereof, and the like that are able to occlude and release lithium have been studied so much.

However, using these negative electrode materials reduces the capacity of a battery while it is effective for inhibiting the growth of lithium dendrites.

Accordingly, research and development for using a negative electrode (anode) including lithium has still been actively conducted, and a number of improvements such as study of a battery-constituting method have been made.

For example, in Non-Patent Document 1, the mechanism of formation and growth of lithium dendrites on a lithium electrode is studied. When a current is applied for charging, $Li^+$ ions precipitate on the lithium electrode; the shape of the lithium electrode changes to cause cracks on the surface; and dendrites grow through the cracks. However, no specific means for preventing the growth of dendrites is disclosed.

Patent Document 1 (Japanese Laid-open Patent Publication No. 09-293518) discloses a filmy electrolyte that has high ionic conductivity and does not leak electrolyte solution, and a lightweight and high-energy-density battery using the filmy electrolyte, though not limited to lithium batteries. Specifically, Patent Document 1 proposes an electrolyte separator having a porous film and ion-conductive solid polymer layers on its both surfaces, and the ion-conductive solid polymer layers serve to prevent the leak of electrolyte solution. However, no specific means for preventing the growth of lithium dendrites is disclosed.

Patent Document 2 (Japanese Laid-open Patent Publication No. 2008-300300) relates to a lithium ion secondary battery and discloses means for inhibiting substances other than lithium ion that cause deterioration of battery properties from moving between a positive electrode and a negative electrode. Specifically, Patent Document 2 proposes providing a substantially non-porous lithium-ion-conductive layer on a porous separator film. The substantially non-porous lithium-ion-conductive layer inhibits various substances other than lithium ion that cause deterioration of battery properties from moving between a positive electrode and a negative electrode. However, no specific means for preventing the movement of lithium ions and the growth of lithium dendrites associated therewith is disclosed.

WO 99/54953 discloses a composite electrolyte for use in a thin plate rechargeable lithium battery comprising a porous or microporous inert polymer separator laminate which carries another porous polymer containing a dissociable lithium compound, and the adherent polymer layers are impregnated with an organic liquid containing lithium salt. The porous or microporous separator laminate may be a single polymer layer or a multiple polymer layer. The composite electrolyte is inserted between the electrodes of a rechargeable lithium battery. In another embodiment the porous polymer separator sheet has an adherent dissociable lithium compound containing polymer layer on each of its major faces. The separator retains sufficient porosity for impregnation with a lithium salt containing organic liquid.

JP 2001 176482 provides a nonaqueous electrolyte secondary battery, having reduced internal resistance and superior high temperature conservation and overcharging characteristics by preventing winkling of the separator, even if a polyvinylidene fluoride resin is used which has superior electrolyte sustainment as a separator material. This is achieved by a nonaqueous electrolyte secondary battery which has a separator, formed with a composite resin film integrated by filling a reinforcing material layer with a polyvinylidene fluoride resin, such that there is no layer of resin covering a surface of the reinforcing material or a separator formed with a composite resin film, in which a polyvinylidene fluoride resin layer and a reinforcing material layer are laminated, such that the reinforcing material layer is not completely impregnated with the resin. With the polyvinylidene fluoride resin, filled with the reinforcing material layer for integration or the polyvinylidene fluoride resin layer laminated on the reinforcing material layer, the swelling of the polyvinylidene fluoride resin, if swollen, in the cross and longitudinal directions, is restricted by the reinforcing material, wrinkling of the separator will not occur.

Thus, there is a need for means to certainly inhibit the growth of dendrites.

PRIOR ART DOCUMENTS

PATENT DOCUMENTS

Patent Document 1: Japanese Laid-open Patent Publication No. 09-293518
Patent Document 2: Japanese Laid-open Patent Publication No. 2008-300300

NON-PATENT DOCUMENTS

Non-Patent Document 1: D. Aurbach et al, Solid State Ionics 148 (2002), pp. 405-416

SUMMARY OF THE INVENTION

PROBLEMS TO BE SOLVED BY THE INVENTION

Lithium is believed to be an ideal negative electrode material because it has a very high theoretical energy density, but using a negative electrode (anode) including lithium has the following problem. Dendritic lithium (lithium dendrite) precipitates on the lithium surface of the negative electrode during charging. The dendritic lithium grows as the charge and discharge is repeated, causing, for example, detachment from the lithium metal to thereby reduce cycle characteristics. In the worst case, the dendritic lithium grows to the extent that it breaks through a separator, causing a short circuit of a battery, which can cause firing of the battery.

Thus, an object of the present invention is to provide an anode protective film that is more certainly able to inhibit the growth of dendrites that can be formed on an anode, and a separator and a secondary battery using the same.

MEANS FOR SOLVING THE PROBLEMS

The present invention is defined by the appended claims.

EFFECTS OF THE INVENTION

The present invention provides a protective film that is more certainly able to inhibit the growth of dendrites that can be formed on an anode including lithium, and a separator and a secondary battery using the same.

BRIEF DESCRIPTION OF THE DRAWINGS

FIG. 1 schematically illustrates the mechanism of growth of a dendrite.
FIG. 2 schematically illustrates the uniform diffusion of lithium ions according to the present invention.
FIG. 3 schematically illustrates the high shape stability to change in anode shape according to the present invention.
FIG. 4 schematically illustrates fibrils (small fibers) of expanded PTFE and nodes (knots) that connect them.
FIG. 5 schematically illustrates a nodeless structure.
FIG. 6 schematically illustrates a coin cell.

BEST MODE FOR CARRYING OUT THE INVENTION

The protective film of the present invention is a film for protecting an anode of a lithium battery, the protective film consisting of:

a polymeric porous film; and
a polymeric material not containing a lithium electrolyte salt but having lithium-ion conductivity per se,
wherein at least one surface of the polymeric porous film is covered with a layer of the polymeric material having lithium-ion conductivity per se, and
wherein the polymeric porous film is completely impregnated with the polymeric material having lithium-ion conductivity per se.

The present invention provides a protective film for protecting an anode. Secondary batteries are basically composed of a positive electrode (cathode)/negative electrode (anode) and a separator including an electrolyte that acts as an ion-conducting medium between the two electrodes. The protective film of the present invention is added to such a basic configuration in superposition.

The anode includes lithium. Lithium has a very high theoretical energy density (3861 mAh/g by weight capacity density) and a low charge/discharge potential (-3.045 V vs. SHE) and thus is considered to be an ideal negative electrode material.

In the anode including lithium, lithium ions contained in the separator or the like move from the cathode side to the anode side during charging. In contrast, lithium ions move to the cathode side during discharging.

During charging, dendritic alkali metal (dendrite) precipitates on the surface of the anode including lithium. The dendrite grows as the charge and discharge is repeated, causing, for example, detachment from the negative electrode metal to thereby reduce cycle characteristics. In the worst case, the dendrite grows to the extent that it breaks through the separator, causing a short circuit of a battery, which can cause firing of the battery.

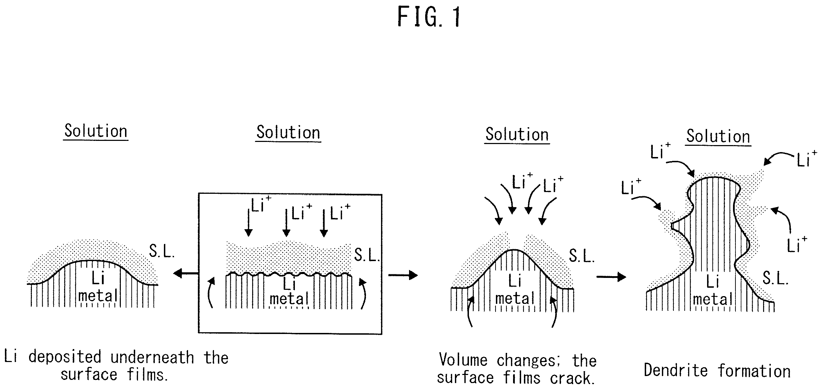

FIG. 1 schematically shows the mechanism of formation and growth of dendrites. Referring to FIG. 1, when a current is applied for charging, $Li^+$ ions precipitate on a lithium electrode; the shape of the lithium electrode changes to cause a crack on the surface; and a dendrite grows through the crack.

The present inventors noted the fact that the precipitation of lithium ions occurred dispersedly and assumed that this is because diffusion of lithium ions is ununiform. Consequently, the shape of the electrode surface ununiformy changes, and this is considered to lead to formation and growth of dendrites. The present inventors conceived a novel idea that uniformization of diffusion of lithium ions and formation of a stable (firm) coating (protective film) that minimizes the shape change of the electrode surface on the electrode surface are effective for preventing dendrites, thereby completing the present invention.

In the protective film of the present invention, at least one surface of the polymeric porous film is covered with a polymeric material having lithium-ion conductivity.

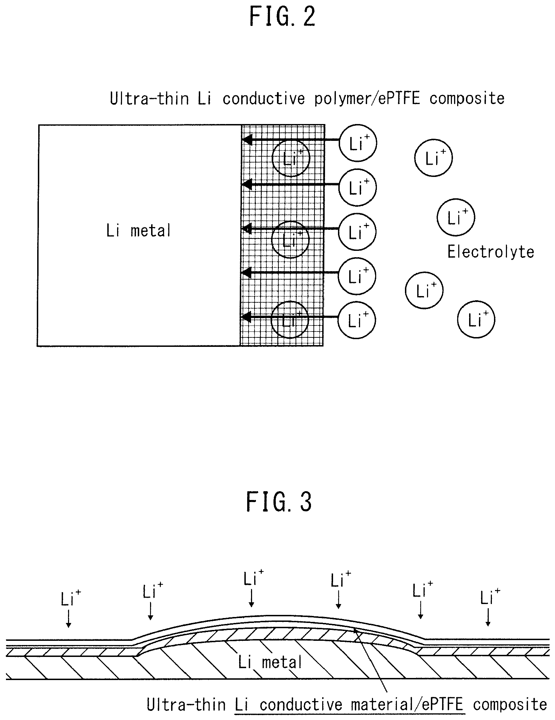

In other words, a layer of a polymeric material having lithium-ion conductivity is formed on at least one surface of the polymeric porous film. The lithium ions that move from the cathode side to the anode side during charging necessarily pass through the layer of a polymeric material having lithium-ion conductivity, at which time the lithium ions are uniformly diffused in the layer of a polymeric material having lithium-ion conductivity (planar direction). This inhibits lithium from being ununiformly dispersed and precipitating locally on the anode surface (see FIG. 2).

The polymeric porous film may comprise fluorine. Since a tetrafluoroethylene (TFE) polymer or copolymer contains fluorine, the polymeric porous film may be a film made of tetrafluoroethylene (TFE) polymer or copolymer. Fluorine is known to react with lithium (anode) according to the following formula.

$$-[CF_2-CF_2]_n + 4nLi \rightarrow =[C=C]=_n + 4nLiF$$

The tetrafluoroethylene (TFE) polymer or copolymer, upon reaction of the fluorine contained therein with lithium, undergoes defluorination (i.e., carbonization), and voids are formed in the film. When the defluorination further proceeds, pores are formed, and uniform diffusion of Li ions cannot be kept uniform. The phenomenon is essentially due to the reaction between fluorine and lithium, and therefore may occur in polymeric porous materials comprising fluorine, as well as tetrafluoroethylene (TFE) polymer or copolymer. However, in the present invention, the surface of the polymeric porous film comprising fluorine, such as a film made of a tetrafluoroethylene (TFE) polymer or copolymer is covered with a polymeric material having lithium-ion conductivity; therefore, the polymeric material constituting the polymeric porous film such as the tetrafluoroethylene (TFE) polymer or copolymer will not directly contact lithium in the anode to undergo defluorination (carbonization), and the soundness of the polymeric porous film comprising fluorine can be maintained.

Even when the strength of the polymeric material itself having lithium-ion conductivity is not high, the polymeric porous film acts as a reinforcing layer to ensure the overall strength of a protective film. In other words, high shape stability to change in anode shape is provided. For example, even if lithium ions are not uniformly diffused and lithium precipitates locally on the anode surface to change the shape of the anode surface, the polymeric porous film inhibits the shape change, not leading to growth of dendrites (see FIG. 3).

At least one surface of the polymeric porous film can be covered with a polymeric material having lithium-ion conductivity by any method, and conventional methods can be appropriately used depending on the material. A material to be applied may be brought into solution for impregnation. For example, any method may be used such as vacuum pressure impregnation, vacuum impregnation, spraying, evaporation to dryness, metering bar method, die coating method, gravure method, reverse roll method, doctor blade method, knife coating method, and bar coating method.

The polymeric porous film (reinforcing layer) is be completely impregnated with the polymeric material having lithium-ion conductivity. The impregnated portion produces an anchoring effect, and the toughness of the layer of the polymeric material having lithium-ion conductivity and the toughness of the whole protective film can be improved. Consequently, shape stability to change in anode shape can be improved. Further, uniform diffusibility of lithium ions in an unreinforced layer that directly contacts with metallic lithium is increased, which, consequently, further inhibits lithium from being ununiformly dispersed and precipitating locally on the anode surface.

The thickness of the layer of a material having lithium-ion conductivity that is not impregnated into the polymeric porous film (reinforcing layer) may be not more than 0.65 $\mu$m.

Such an unimpregnated layer is an unreinforced part, and thus when the layer is too thick, shape stability to change in anode shape can be reduced, and, further, resistance of lithium-ion conductivity can increase. Therefore, the upper limit of the thickness may be 0.65 $\mu$m, 0.5 $\mu$m, 0.4 $\mu$m, or 0.35 $\mu$m. The lower limit of the thickness is not particularly limited as long as lithium ions diffuse sufficiently in the layer of a material having lithium-ion conductivity, and it may be, for example, 0.05 $\mu$m, 0.1 $\mu$m, 0.15 $\mu$m, 0.25 $\mu$m, or 0.35 $\mu$m.

Specifically, the polymeric material having lithium-ion conductivity per se which constitutes the protective film is preferably a homopolymer of vinylidene fluoride (PVDF) or a copolymer of vinylidene fluoride and hexafluoropropylene (HFP) (PVDF-HFP) in terms of lithium-ion conductivity and processability.

PVDF and PVDF-HFP that act as a polymer solid electrolyte are conventionally known, but they are actually produced by adding an electrolyte salt and plasticizer to PVDF or PVDF-HFP so as to serve as a separator. Also when used as a gel electrolyte, PVDF and PVDF-HFP actually serve as a solid electrolyte by forming pores and impregnating electrolyte solution into the pores.

The protective film of the present invention consists of a polymeric porous film and a polymeric material having lithium-ion conductivity per se, and is different from conventional PVDF and PVDF-HFP that act as a polymer solid electrolyte in that the protective film of the present invention does not require an electrolyte salt.

The polymeric porous film (reinforcing layer) which constitutes the protective film will be described.

A polymeric material for forming the polymeric porous film is not so restricted, and may be, for example, at least one selected from polyolefin, polyester, poly vinylidene fluoride, polyamide, polyamide-imide, polyimide, polybenzimidazole, polyetherimide, polyacrylonitrile, polymethyl methacrylate, polyethylene oxide, polysulphone, polyether sulphone, polyphenylsulphone, polyphenylene sulfide, polytetrafluoroethylene, polyurethane, silicone resin, styrene based resin, ABS resin, vinyl chloride resin, polyvinyl acetate resin, acrylate resin, acetal resin, poly carbonate resin, and copolymer comprising the monomer for the aforementioned single polymers.

The polymeric porous film may be a film made of a tetrafluoroethylene (TFE) polymer or copolymer. Tetrafluoroethylene (TFE) polymer or copolymer is a resin with extremely high chemical stability and is excellent in weatherability, UV resistance, heat resistance, cold resistance, water resistance, and the like. In addition, the porosity, density, specific surface area, mechanical strength, and the like of the TFE polymer or copolymer can be freely adjusted.

For example, the tetrafluoroethylene (TFE) polymer or copolymer may be polytetrafluoroethylene, perfluoroalkoxyalkane (PFA), tetrafluoroethylene/hexafluoropropene copolymer (FEP), ethylene/tetrafluoroethylene copolymer (ETFE), ethylene/chlorotrifluoroethylene copolymer (ECTFE), or a mixture thereof.

The thickness of the polymeric porous film (reinforcing layer) may be 0.01 $\mu$m to 1 $\mu$m. When the thickness is too small, a satisfactory reinforcing effect is not produced, and when the thickness is too large, ionic conductivity decreases.

The polymeric porous film which constitutes the protective film may be expanded or expanded porous.

Expanded porous films of tetrafluoroethylene (TFE) polymer or copolymer have been hitherto studied so much, and films with high porosity and high strength have been obtained. Tetrafluoroethylene (TFE) polymer or copolymer is known to have high crystallinity and have high strength by itself. An expanded porous film of tetrafluoroethylene (TFE) polymer or copolymer is suitably obtained by expanding a precursor formed by melt fusion of fine powders of tetrafluoroethylene (TFE) polymer or copolymer (see descriptions of Japanese Examined Patent Publication 56-45773, Japanese Examined Patent Publication 56-17216, and U.S. Patent No. 4187390). By controlling the conditions for fusing the fine powders of tetrafluoroethylene (TFE) polymer or copolymer or the conditions for expanding the precursor, a film with high porosity and high strength can be produced. In addition, tetrafluoroethylene (TFE) polymer or copolymer is advantageous in that it has a high melting point and does not melt even at 250°C or higher.

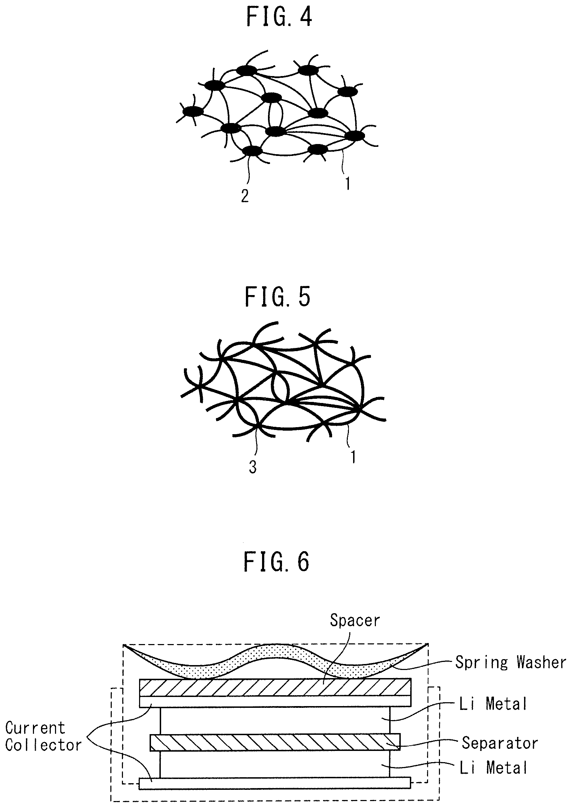

More specifically, a polymeric porous film, such as an expanded porous film of tetrafluoroethylene (TFE) polymer or copolymer is obtained in such a manner that a paste-like formed body obtained by mixing fine powders of tetrafluoroethylene (TFE) polymer or copolymer with a forming assistant is expanded after removing or without removing the forming assistant therefrom and optionally baked. Electron microscope observation shows that the fine structure of the expanded porous film is a unique fibrous porous structure, the surface and inside of which are both composed of fibrils (small fibers) and nodes (knots) that connect them. Such a fibril/node structure changes its appearance in accordance with the expanding direction and expanding ratio. For example, when the film is uniaxially expanded, the fibrils are unidirectionally oriented in the expanding direction in the form of a reed screen, and nodes connecting the fibrils are observed to be in the form of rectangular islands elongated in the expanding direction. When the film is biaxially expanded, the fibrils radiate in the expanding direction, and nodes connecting them are observed to be in the form of fine particles rather than islands (see FIG. 4). Further, as the expanding ratio is increased, the fibrils generally become longer regardless of the expanding direction, and the node shape becomes relatively smaller, ultimately resulting in a so-called nodeless structure composed only of fibrils (see FIG. 5). The node part is an obstacle in view of ion diffusion, and a smaller node part leads to uniform ion diffusion in the film. The specific surface area of an expanded porous film can be used as an indicator of being a nodeless structure. For example, a film having a specific surface area of 15 $m^2/g$ or more or 20 $m^2/g$ or more may be considered to be a film with a nodeless structure.

The porosity of the polymeric porous film can be appropriately controlled by expanding. The porosity is not critical as long as a polymer having lithium-ion conductivity can be held (impregnated) in pores in order to ensure lithium-ion conductivity. For example, the lower limit of the porosity may be 30%, 35%, 40%, 45%, 50%, 55%, or 60%. When the porosity is too high, the strength may be insufficient, and therefore, for example, the upper limit of the porosity may be 98%, 95%, 90%, 85%, 80%, 75%, 70%, 65%, or 60%. The porosity of a porous film can be calculated by the following equation using an apparent density $\rho$ measured in accordance with the method for measuring apparent density defined in JIS K 6885. (The following equation is an example for determining the porosity of PTFE. Accordingly, the true density of PTFE is taken as 2.2. The value of true density is adjusted depending on the material which constitutes the porous film.)

$$\text{Porosity (\%)} = [(2.2 - \rho)/2.2] \times 100$$

The basis weight of the polymeric porous film may be 0.1 $g/m^2$ or more, preferably 0.2 $g/m^2$ or more, and more preferably 0.3 $g/m^2$ or more, and it may be 0.5 $g/m^2$ or less, preferably 0.4 $g/m^2$ or less, and more preferably 0.3 $g/m^2$ or less.

When the basis weight is too small, a satisfactory reinforcing effect is not produced, and when the basis weight is too large, ionic conductivity decreases.

The Gurley number of the protective film may be 5000 seconds or more. This means that the protective film is substantially non-porous. For that to happen, one or both of the polymeric material having lithium-ion conductivity and the polymeric porous film may be non-porous. Since the protective film is non-porous, even when dendrites are formed, the growth of the dendrites is physically inhibited by the protective film.

The Gurley number was evaluated in accordance with JIS P8117 (1998). "Gurley number" refers to the time (seconds) for passing 100 $cm^3$ of air vertically through a sample with an area of 6.45 $cm^2$ under a pressure of 1.29 kPa.

The present invention also relates to a separator using a protective film. The separator is a separator film on which the at least one protective film described above is laminated, and a material having lithium-ion conductivity is disposed between the polymeric porous film of the protective film and the separator film.

Since the separator is provided with the protective film, formation of dendrites at an anode is inhibited, which leads to protection of the separator. Since a material having lithium-ion conductivity is disposed between the protective film and the separator, lithium-ion conductivity is ensured, and the degree of uniform diffusion of lithium ions is further increased.

The material having lithium-ion conductivity may be the polymeric material having lithium-ion conductivity used to constitute the protective film.

The separator may include a film made of an expanded porous tetrafluoroethylene (TFE) polymer or copolymer. The film made of an expanded porous tetrafluoroethylene (TFE) polymer or copolymer may be one used to constitute the protective film.

The present invention also relates to a lithium secondary battery using a protective film. The lithium secondary battery is a lithium secondary battery using the protective film described above, and the protective film's surface covered with a polymeric material having lithium-ion conductivity contacts an anode. In other words, the anode and the polymeric material having lithium-ion conductivity are in contact with each other. Therefore, lithium ions are uniformly dispersed immediately before reaching the anode surface, and its local precipitation is certainly inhibited. Further, when the polymeric porous film comprises fluorine, for example, the film made of tetrafluoroethylene (TFE) polymer or copolymer (reinforcing layer) will not directly contact lithium in the anode to undergo defluorination (carbonization), and the soundness of the protective film and, in turn, of the secondary battery can be maintained.

The lithium secondary battery comprises at least an anode, a protective film, a separator and a cathode which may be laminated in this order.

EXAMPLES

The present invention will now be described in detail by way of example, but the present invention is not limited by the examples.

In the examples, various protective films were produced under the conditions shown in Table 1, and the protective films were used to produce coin cells. Measurements of total electrical resistance ($\Omega$) of a protective film and a separator were made, and charge-discharge tests of the coin cells (coin cell cycle by Li/Li) were performed. In the charge-discharge test, the average charge-discharge efficiency and the number of cycles until the occurrence of an internal short circuit due to Li dendrites were calculated to evaluate the life of the coin cells. A description will now be given in more detail.

Table 1

| | Polymeric Species to be Filled | Thickness of Reinforcing Layer (1) (μm) | Thickness of Unreinforced Layer (2) (μm) | Membrane Before Filling | | | G No. of Membrane After Filling (sec) | Separator |
| --- | --- | --- | --- | --- | --- | --- | --- | --- |
| | | | | Specific Surface Area (m$^2$/g) | Porosity (%) | Basis Weight (g/m$^2$) | | |
| Example 1 | PVdF | 0.35 | 0.15 | 20 | 60 | 0.3 | 5000 or more | PE |
| Example 2 | PVdF | 0.35 | 0.05 | 20 | 60 | 0.3 | 5000 or more | PE |
| Example 3 | PVdF | 0.35 | 0.35 | 20 | 60 | 0.3 | 5000 or more | PE |
| Example 4 | PVdF | 0.35 | 0.5 | 20 | 60 | 0.3 | 5000 or more | PE |
| Example 5 | PVdF | 0.35 | 0.65 | 20 | 60 | 0.3 | 5000 or more | PE |
| Example 6 | PVdF | 0.35 | 0.15 | 10 | 60 | 0.3 | 5000 or more | PE |
| Example 7 | PVdF | 0.35 | 0.15 | 5 | 60 | 0.3 | 5000 or more | PE |
| Example 8 | PVdF | 0.35 | 0.15 | 20 | 35 | 0.5 | 5000 or more | PE |
| Example 9 | PVdF | 0.35 | 0.15 | 20 | 80 | 0.2 | 5000 or more | PE |
| Example 10 | PVdF-HFP | 0.35 | 0.15 | 20 | 60 | 0.3 | 5000 or more | PE |
| Example 11 | PVdF | 0.35 | 0.15 | 20 | 60 | 0.3 | 5000 or more | PTFE |
| Comparative Example 1 | PVdF | 0.35 | 0 | 20 | 60 | 0.3 | 5000 or more | PE |
| Comparative Example 2 | - | - | - | - | - | - | 100 | PE |

EP 3 043 402 B1

8

<Preparation of Reinforcing Layer>

A PTFE film which is a film made of a tetrafluoroethylene (TFE) polymer or copolymer (available from W. L. Gore & Associates, Inc.) was employed as a reinforcing layer (polymeric porous film) which constitutes the protective film. In all of the Examples and Comparative Examples, the thickness of a reinforcing layer was 0.35 $\mu$m. The reinforcing layer was prepared such that its specific surface area, porosity, and basis weight before filling a polymeric material having lithium-ion conductivity were as shown in Table 1.

<Filling of Polymeric Material>

A homopolymer of vinylidene fluoride (PVdF, Examples 1 to 9, 11, and Comparative Example 1) and a copolymer of vinylidene fluoride and hexafluoropropylene (PVdF-HFP, Example 10) were employed as a polymeric material having lithium-ion conductivity filled into a reinforcing layer. In Comparative Example 2, a polymeric material was not filled, and a reinforcing layer alone was used.

PVdF (maker: ARKEMA, specification: KYNAR710) or PVdF-HFP (maker: ARKEMA, specification: KYNAR FLEX2820-20) was dissolved in a given organic solvent to a given concentration. The resulting solution was filled (impregnated) into the reinforcing layer described above. The degree of filling (impregnation) was adjusted according to Examples and Comparative Examples to obtain protective films having a thickness of the layer not filled into the reinforcing layer (thickness of an unreinforced layer) shown in Table 1.

The Gurley number of the protective film obtained was measured in accordance with JIS P8117 (1998). The results were all 5000 or more except Comparative Example 2 (in which polymer was not filled).

<Preparation of Separator>

A separator of a hydrophilized porous polyethylene (PE) film or expanded porous polytetrafluoroethylene (PTFE) film was prepared as a separator used in a coin cell. As a PE separator (Examples 1 to 10 and Comparative Examples 1 to 2), commonly available PE separators with a thickness of 25 $\mu$m and a porosity of about 50% were used. As a PTFE separator (Example 11), BSP0102560-2 (thickness: 25 $\mu$m, porosity: 60%) available from Japan Gore-Tex Inc. was used.

<Production of Coin Cell>

Two pieces of Li with a diameter of 14 mm and a thickness of 100 $\mu$m were prepared as an electrode (8.05 mg, 31.8 mAh). As an electrolyte solution, 1 moldm$^{-3}$ LiPF$_6$/EC:PC = 1:1 was prepared. These materials were incorporated into a 2032 coin cell available from Hohsen Corp. in a separator glove box together with the protective film shown in Table 1 to produce a coin cell of FIG. 6.

<Measurement of Resistance Value>

A protective film and a separator were assembled. Under such conditions, the resistance value was measured. The separator contains the same electrolyte solution as used for a coin cell. Using a predetermined measurement jig, the resistance value was measured with an LCR meter at 1 kHz. The results are shown in Table 2. There was a tendency that the resistance increased as the thickness of an unreinforced layer increased (Examples 1 to 5). However, in Examples (using a separator provided with a protective film) as compared to Comparative Example 2 (using a separator alone without a protective film), the resistance did not increase excessively, and battery operation was not affected.

<Charge-Discharge Test>

Charge-discharge tests (coin cell cycle by Li/Li) were performed using a coin cell. Charge-discharge measurements were made using a battery charge-discharge apparatus (HJ1001SM8A) manufactured by HOKUTO DENKO CORP. The charge-discharge test at a current density of 10 mA/cm$^2$ (15.4 mA in terms of an electrode with a diameter of 14 mm) for 30 minutes (DOD: depth of discharge, about 25%) was repeated. The number of cycles until the occurrence of an internal short circuit due to dendrites was calculated. The results are shown in Table 2.

Table 2

| Charge-Discharge Test Results (Life Evaluation) |
| --- |

(continued)

|  | Resistance (Ω) | Average Charge-Discharge Efficiency (%) | The Number of Cycles Before Short Circuit (Number) |
|---|---|---|---|
| Example 1 | 160 | 99.7 | 1000 or more |
| Example 2 | 155 | 99.7 | 1000 or more |
| Example 3 | 180 | 99.7 | 1000 or more |
| Example 4 | 200 | 99.7 | 1000 or more |
| Example 5 | 250 | 99.7 | 1000 or more |
| Example 6 | 165 | 99.6 | 1000 or more |
| Example 7 | 170 | 99.5 | 1000 or more |
| Example 8 | 200 | 99.5 | 1000 or more |
| Example 9 | 145 | 99.75 | 1000 or more |
| Example 10 | 170 | 99.6 | 1000 or more |
| Example 11 | 155 | 99.7 | 1000 or more |
| Comparative Example 1 | 155 | 98.5 | 250 |
| Comparative Example 2 | 150 | 90 | 50 |

The charge-discharge efficiency of a battery can be evaluated using FOM (Figure of Merit) defined by the following equation.

A 10-cycle charge-discharge test was performed, and the sum total of the amount of electrochemically active lithium remained on a working electrode and the discharge capacity after repeating charge and discharge was measured. The lithium charge-discharge efficiency was calculated using the following equation. In short, it can be said that the more the amount of lithium remained and the discharge capacity after carrying out a 10-cycle charge-discharge, the higher the charge-discharge efficiency.

```
Lithium charge-discharge efficiency (%) = (1 -
1/FOM) × 100    (1)

FOM = (sum total of discharge capacity after
repeating charge and discharge)/((amount of lithium
filled) - (amount of electrochemically active lithium
remained))    (2)
```

In Comparative Example 2 (using separator alone without a protective film), the charge-discharge efficiency was extremely low. In Examples 1 to 11, high charge-discharge efficiency was exhibited.

The number of cycles until the occurrence of an internal short circuit due to dendrites was calculated. The results are shown in Table 2. In the coin cells using the protective film of the present invention (Examples 1 to 11), an internal short circuit did not occur even after 1000 cycles or more. In contrast, in Comparative Example 2 (using a separator alone without a protective film), a short circuit occurred after 50 cycles. In Comparative Example 1, a short circuit occurred after 250 cycles. In the protective film of Comparative Example 1, the thickness of an unreinforced layer is 0 $\mu$m, i.e., the surface of the reinforcing film of PTFE is not covered with a polymeric material. Therefore, the anode is in contact not with a polymeric material but with PTFE. In such parts, PTFE in the reinforcing layer reacted with lithium in the anode, and the protective film could not serve as a protective film.

## Claims

1. A protective film for protecting an anode of a lithium battery, the protective film consisting of:

   a polymeric porous film; and
   a polymeric material having lithium-ion conductivity per se, which does not contain a lithium electrolyte salt, wherein at least one surface of the polymeric porous film is covered with a layer of the polymeric material having lithium-ion conductivity per se, and
   wherein the polymeric porous film is completely impregnated with the polymeric material having lithium-ion conductivity per se.

2. The protective film according to claim 1, wherein the polymeric porous film is made of a tetrafluoroethylene (TFE) polymer or copolymer.

3. The protective film according to claim 1 or 2, wherein the polymeric porous film is produced by expanding.

4. The protective film according to claim 1 or 2, wherein the polymeric porous film has a thickness of 0.01 $\mu$m to 1 $\mu$m.

5. The protective film according to claim 1, wherein the layer of the polymeric material having lithium-ion conductivity per se that is not impregnated into the polymeric porous film has a thickness of not more than 0.65 $\mu$m.

6. The protective film according to any one of claims 1 to 5, wherein the material having lithium-ion conductivity per se is a homopolymer of vinylidene fluoride or a copolymer of vinylidene fluoride and hexafluoropropylene (HFP).

7. The protective film according to any one of claims 1 to 6, wherein the polymeric porous film has a nodeless structure without a node.

8. The protective film according to any one of claims 1 to 7, wherein the polymeric porous film has a porosity of 35% to 98%.

9. The protective film according to any one of claims 1 to 8, wherein the polymeric porous film has a basis weight of 0.1 g/m$^2$ to 0.5 g/m$^2$.

10. The protective film according to any one of claims 1 to 9, wherein the protective film has a Gurley number of 5000 seconds or more.

11. A separator on which the at least one protective film according to any one of claims 1 to 10 is laminated, said separator comprising a separator film and a material having lithium-ion conductivity, wherein the material having lithium-ion conductivity is disposed between the polymeric porous film of the protective film and the separator film.

12. A separator according to claim 11, wherein the separator film is made of an expanded porous tetrafluoroethylene (TFE) polymer or copolymer.

13. A lithium secondary battery comprising a cathode, an anode and a separator, further comprising the protective film according to any one of claims 1 to 10, wherein the protective film's surface covered with the layer of polymeric material having lithium-ion conductivity per se contacts the anode.

14. The lithium secondary battery according to claim 13, wherein at least the anode, the protective film, a separator and a cathode are laminated in this order.


## Patentansprüche

1. Schutzfilm zum Schützen einer Anode einer Lithiumbatterie, wobei der Schutzfilm aus Folgendem besteht:

   einem polymeren porösen Film; und
   einem Polymermaterial mit Lithiumionenleitfähigkeit an sich, das kein Lithiumelektrolytsalz enthält,
   wobei mindestens eine Oberfläche des polymeren porösen Films mit einer Schicht des Polymermaterials mit Lithiumionenleitfähigkeit an sich bedeckt ist, und

wobei der polymere poröse Film vollständig mit dem Polymermaterial mit Lithiumionenleitfähigkeit an sich imprägniert ist.

**2.** Schutzfilm nach Anspruch 1, wobei der polymere poröse Film aus einem Tetrafluorethylen-(TFE-)Polymer oder Copolymer hergestellt ist.

**3.** Schutzfilm nach Anspruch 1 oder 2, wobei der polymere poröse Film durch Expandieren erzeugt wird.

**4.** Schutzfilm nach Anspruch 1 oder 2, wobei der polymere poröse Film eine Dicke von 0,01 $\mu$m bis 1 $\mu$m aufweist.

**5.** Schutzfilm nach Anspruch 1, wobei die Schicht des Polymermaterials mit Lithiumionenleitfähigkeit an sich, die nicht in den polymeren porösen Film imprägniert ist, eine Dicke von nicht mehr als 0,65 $\mu$m aufweist.

**6.** Schutzfilm nach einem der Ansprüche 1 bis 5, wobei das Material mit Lithiumionenleitfähigkeit an sich ein Homopolymer aus Vinylidenfluorid oder ein Copolymer aus Vinylidenfluorid und Hexafluorpropylen (HFP) ist.

**7.** Schutzfilm nach einem der Ansprüche 1 bis 6, wobei der polymere poröse Film eine knotenlose Struktur ohne Knoten aufweist.

**8.** Schutzfilm nach einem der Ansprüche 1 bis 7, wobei der polymere poröse Film eine Porosität von 35 % bis 98 % aufweist.

**9.** Schutzfilm nach einem der Ansprüche 1 bis 8, wobei der polymere poröse Film ein Basisgewicht von 0,1 g/m$^2$ bis 0,5 g/m$^2$ aufweist.

**10.** Schutzfilm nach einem der Ansprüche 1 bis 9, wobei der Schutzfilm eine Gurley-Zahl von 5000 Sekunden oder mehr aufweist.

**11.** Trenner, auf den der mindestens eine Schutzfilm nach einem der Ansprüche 1 bis 10 laminiert ist, wobei der Trenner einen Trennerfilm und ein Material mit Lithiumionenleitfähigkeit umfasst, wobei das Material mit Lithiumionenleitfähigkeit zwischen dem polymeren porösen Film des Schutzfilms und dem Trennerfilm angeordnet ist.

**12.** Trenner nach Anspruch 11, wobei der Trennerfilm aus einem expandierten porösen Tetrafluorethylen-(TFE-)Polymer oder Copolymer besteht.

**13.** Sekundäre Lithiumbatterie, umfassend eine Kathode, eine Anode und einen Trenner, ferner umfassend den Schutzfilm nach einem der Ansprüche 1 bis 10, wobei die Oberfläche des Schutzfilms, die mit der Schicht aus Polymermaterial mit Lithiumionenleitfähigkeit an sich bedeckt ist, die Anode kontaktiert.

**14.** Sekundäre Lithiumbatterie nach Anspruch 13, wobei mindestens die Anode, der Schutzfilm, ein Trenner und eine Kathode in dieser Reihenfolge laminiert sind.

**Revendications**

**1.** Film protecteur destiné à protéger une anode d'une batterie au lithium, le film protecteur étant constitué par :

un film poreux polymère ; et

un matériau polymère possédant une conductivité lithium-ion par lui-même, qui ne contient pas de sel d'électrolyte de lithium, au moins une surface du film poreux polymère étant recouverte d'une couche du matériau polymère possédant une conductivité lithium-ion par lui-même, et ledit film poreux polymère étant complètement imprégné du matériau polymère possédant une conductivité lithium-ion par lui-même.

**2.** Film protecteur selon la revendication 1, ledit film poreux polymère étant constitué d'un polymère ou d'un copolymère de tétrafluoroéthylène (TFE).

**3.** Film protecteur selon la revendication 1 ou 2, ledit film poreux polymère étant produit par expansion.

**4.** Film protecteur selon la revendication 1 ou 2, ledit film poreux polymère possédant une épaisseur allant de 0,01 $\mu$m à 1 $\mu$m.

**5.** Film protecteur selon la revendication 1, ladite couche du matériau polymère possédant une conductivité lithium-ion par lui-même qui n'est pas imprégnée dans le film poreux polymère possédant une épaisseur inférieure ou égale à 0,65 $\mu$m.

**6.** Film protecteur selon l'une quelconque des revendications 1 à 5, ledit matériau possédant une conductivité lithium-ion par lui-même étant un homopolymère de fluorure de vinylidène ou un copolymère de fluorure de vinylidène et d'hexafluoropropylène (HFP).

**7.** Film protecteur selon l'une quelconque des revendications 1 à 6, ledit film polymère poreux possédant une structure sans nœud sans aucun nœud.

**8.** Film protecteur selon l'une quelconque des revendications 1 à 7, ledit film polymère poreux possédant une porosité allant de 35 % à 98 %.

**9.** Film protecteur selon l'une quelconque des revendications 1 à 8, ledit film polymère poreux possédant un grammage de 0,1 g/m$^2$ à 0,5 g/m$^2$.

**10.** Film protecteur selon l'une quelconque des revendications 1 à 9, ledit film protecteur possédant un nombre Gurley supérieur ou égal à 5 000 secondes.

**11.** Séparateur sur lequel l'au moins un film protecteur selon l'une quelconque des revendications 1 à 10 est stratifié, ledit séparateur comprenant un film séparateur et un matériau possédant une conductivité lithium-ion, ledit matériau possédant une conductivité lithium-ion étant disposé entre le film poreux polymère du film protecteur et le film séparateur.

**12.** Séparateur selon la revendication 11, ledit film séparateur étant constitué d'un polymère ou copolymère poreux expansé de tétrafluoroéthylène (TFE).

**13.** Batterie secondaire au lithium comprenant une cathode, une anode et un séparateur, comprenant en outre le film protecteur selon l'une quelconque des revendications 1 à 10, ladite surface du film protecteur, recouverte de la couche de matériau polymère possédant une conductivité lithium-ion par lui-même, étant en contact avec l'anode.

**14.** Batterie secondaire au lithium selon la revendication 13, au moins l'anode, le film protecteur, un séparateur et une cathode étant stratifiés dans cet ordre.

FIG. 1

Solution

Solution

Solution

Solution

Li metal

S.L.

Li⁺ Li⁺ Li⁺

Li metal

S.L.

Li⁺ Li⁺

Li metal

S.L.

Li⁺ Li⁺ Li⁺

Li metal

S.L.

Li deposited underneath the surface films.

Volume changes: the surface films crack.

Dendrite formation

# FIG. 2

Ultra-thin Li conductive polymer/ePTFE composite

Li metal

Li$^+$

Li$^+$

Electrolyte

# FIG. 3

Li$^+$  Li$^+$  Li$^+$  Li$^+$  Li$^+$  Li$^+$

Li metal

Ultra-thin Li conductive material/ePTFE composite

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9293518 A
- JP 2008300300 A
- WO 9954953 A
- JP 2001176482 A
- JP 56045773 A
- JP 56017216 A
- US 4187390 A

**Non-patent literature cited in the description**

- **D. AURBACH et al.** *Solid State Ionics,* 2002, vol. 148, 405-416